# EUROPÄISCHE PATENTSCHRIFT

(11) **EP 2 238 021 B1**
(45) Veröffentlichungstag und Bekanntmachung des Hinweises auf die Patenterteilung: **13.04.2011**
(21) Anmeldenummer: 08871637.8
(22) Anmeldetag: 10.12.2008
(51) Int. Cl.: B64C 1/12, B64C 1/06

(54) **VERBINDUNGSANORDNUNG ZUM VERBINDEN ZWEIER VERSTEIFUNGSELEMENTE UNTERSCHIEDLICHEN QUERSCHNITTPROFILS FÜR EIN LUFT- ODER RAUMFAHRZEUG, UND EIN SCHALENBAUTEIL**
CONNECTING ARRANGEMENT FOR JOINING TWO STIFFENING ELEMENTS HAVING DIFFERENT CROSS-SECTIONAL PROFILES FOR AN AIRCRAFT OR SPACECRAFT, AND SHELL COMPONENT
SYSTEME D'ASSEMBLAGE POUR ASSEMBLER DEUX ELEMENTS DE RENFORCEMENT PRESENTANT DIFFERENTS PROFILS DE SECTION TRANSVERSALE POUR AERONEF OU VAISSEAU SPATIAL, ET ELEMENT MONOCOQUE

(30) Priorität: 30.01.2008 DE 102008006834; 30.01.2008 US 63012
(43) Veröffentlichungstag der Anmeldung: 13.10.2010
(73) Patentinhaber: Airbus Operations GmbH, 21129 Hamburg (DE)
(72) Erfinder: TACKE, Stefan, 21614 Buxtehude (DE); LENGSFELD, Hauke, 21717 Helmste (DE); REYE, Volker, 22609 Hamburg (DE)
(74) Vertreter: Peckmann, Ralf
(86) Internationale Anmeldenummer: PCT/EP2008/067214
(87) Internationale Veröffentlichungsnummer: WO 2009/095133

(56) Entgegenhaltungen:
- DE-A1-102007 029 500
- DE-A1-102007 033 868
- US-A1- 2006 060 705

## Beschreibung

Die vorliegende Erfindung bezieht sich auf eine Verbindungsanordnung zum Verbinden zweier Versteifungselemente unterschiedlichen Querschnittprofils für ein Luft- oder Raumfahrzeug, und ein Schalenbauteil.

Obwohl auf beliebige Schalenbauteile anwendbar, werden die vorliegende Erfindung sowie die ihr zugrunde liegende Problematik nachfolgend mit Bezug auf Faserverbundbauteile, beispielsweise Kohlefaserkunststoff (CFK)-Bauteile, zum Beispiel Hautschalen eines Flugzeugs, näher erläutert.

Es ist allgemein bekannt, CFK-Hautschalen mit Versteifungselementen, so genannten CFK-Stringern zu versteifen, um den hohen Belastungen im Luft- oder Raumfahrzeugbereich bei möglichst geringem zusätzlichen Gewicht standzuhalten. Dabei werden im Wesentlichen zwei Arten von Stringern unterschieden: T- und Omega-Stringer.

T-Stringer weisen einen schmalen Kopfabschnitt und einen breiten Fußabschnitt auf. An dem Fußabschnitt sind sie mit der Hautschale verbunden und weisen den Vorteil einer einfachen Herstellbarkeit auf.

Omega-Stringer weisen in etwa ein Hutprofil auf, wobei dessen Enden als Fußabschnitt mit der Hautschale verbunden sind.

Die Verwendung von Faserverbundbauteilen ist im Flugzeugbau weit verbreitet. Sie werden zum Beispiel durch Vakuuminfusionsverfahren zum Einbringen einer Matrix, beispielsweise eines Epoxidharzes, in Faserhalbzeuge und nachfolgendem Härten hergestellt. Infusionsverfahren können gegenüber anderen bekannten Verfahren zur Herstellung von Faserverbundbauteilen, wie beispielsweise dem Prepreg-Verfahren, kostengünstig sein, weil dies die Verwendung von kostengünstigeren Faserhalbzeugen erlaubt.

Daher sind bei der Herstellung von Schalenbauteilen für den Flugzeugbau versteifende Stringer verschiedener Profilformen derzeit unabdingbar. Auf Grund der statischen Lastanforderungen und dem Bestreben die Strukturen möglichst leicht, fertigungs- und wartungsgerecht zu konstruieren, kann in gewissen Bereichen die Kupplung von unterschiedlichen Stringerprofilformen nötig sein.

DE 10 2006 008 455 A1 beschreibt ein Verfahren und eine Vorrichtung zum Anbringen eines Verbindungsmittels an einem Stringer. Eine Verbindung von Stringern unterschiedlichen Profils ist nicht angegeben.

Vor diesem Hintergrund liegt der vorliegenden Erfindung die Aufgabe zugrunde, eine Verbindungsanordnung für Versteifungselemente bereitzustellen, um die oben genannten Nachteile zu beheben bzw. erheblich zu reduzieren.

Erfindungsgemäß wird diese Aufgabe durch eine Verbindungsanordnung mit den Merkmalen des Patentanspruchs 1 und ein Schalenbauteil mit den Merkmalen des Patentanspruchs 10 gelöst.

Demgemäß wird eine Verbindungsanordnung zum Verbinden zweier Versteifungselemente eines Luft- oder Raumfahrzeugs bereitgestellt. Die Versteifungselemente besitzen unterschiedliche Querschnittsprofile mit jeweils zumindest einem Fußabschnitt und zumindest einem Kammabschnitt. Die Verbindungsanordnung weist mindestens ein Fußabschnitt-Verbindungselement auf, welches an einer Seite an die geometrische Form des Fußabschnitts des ersten Versteifungselementes und an der gegenüberliegenden Seite an die geometrische Form des Fußabschnitts des zweiten Versteifungselementes anpassbar und an diesen jeweils fest verbindbar ist. Weiterhin besitzt die Verbindungsanordnung mindestens ein Kammabschnitt-Verbindungselement welches an einer Seite an die geometrische Form des Kammabschnitts des ersten Versteifungselementes und an der gegenüberliegenden Seite an die geometrische Form des Kammabschnitts des zweiten Versteifungselementes anpassbar und an diesen jeweils fest verbindbar ist.

Ferner wird ein Schalenbauteil eines Luft- oder Raumfahrzeugs bereitgestellt. Es weist zumindest zwei Versteifungselementen unterschiedlichen Querschnittprofils auf. Diese Versteifungselemente sind in ihrer Längsrichtung mittels einer oben beschriebenen Verbindungsanordnung verbunden.

In den Unteransprüchen finden sich vorteilhafte Ausgestaltungen und Verbesserungen der vorliegenden Erfindung.

Eine grundlegende Idee der Erfindung besteht darin, eine Verbindungsanordnung mit einem Fußabschnitt- und einem Kammabschnitt-Verbindungselement zu schaffen, welche an die unterschiedlichen geometrischen Formen der zu verbindenden Versteifungselemente angepasst sind.

Somit weist die vorliegende Erfindung gegenüber den eingangs genannten Ansätzen unter anderem den Vorteil auf, dass es in einer Ausführung möglich ist, Versteifungselemente mit unterschiedlichem Querschnittsprofil auch bei Versatz derselben ohne zusätzliche Shims zu koppeln, wobei in einer anderen Ausführung die Möglichkeit besteht, Versteifungselemente mit unterschiedlichen Querschnittsprofil auf einem Schalenbauteil wie auch an einer Verbindungsstelle von Schalenelementen eines Schalenbauteils mit der gleichen Verbindungsanordnung zu koppeln und dabei einen minimalen Teileaufwand aufzuweisen.

In einer bevorzugten Ausführung ist vorgesehen, dass jeweils ein Fußabschnitt-Verbindungselement und ein Kammabschnitt-Verbindungselement beiderseits der Kammabschnitte der zu verbindenden Versteifungselemente an den korrespondierenden Fußabschnitten und Kammabschnitten verbindbar sind. Diese Verbindung kann zum Beispiel durch Nieten erfolgen.

Die Fußabschnitt-Verbindungselemente sind in einer Ausführung als L-Profile ausgebildet, können aber auch zum Beispiel Flachmaterial sein. Durch eine von den Kammabschnitt-Verbindungselementen unabhängige Bauweise sind individuelle Anpassungen einfach ausführbar.

Die Kammabschnitt-Verbindungselemente sind beiderseits der zu verbindenden Kammabschnitte der Versteifungselemente in bevorzugter Ausführung in spiegelbildlicher Ausbildung vorgesehen. Bei seitlich versetzten Versteifungselementen kann der Versatz durch unterschiedliche Höhenanordnungen derselben Kammabschnitt-Verbindungselemente ohne zwischenlagen bzw. Shims ausgeglichen werden.

Die Fußabschnitt-Verbindungselemente können beispielsweise für beide Seiten der Verbindungsanordnung aus dem gleichen Profilstab abgelängt werden, wobei keine spiegelbildlichen Ausführung notwendig sind.

Hierbei weist das Kammabschnitt-Verbindungselement eine Koppelfläche zur Verbindung mit dem ersten Versteifungselement und eine Koppelprofilfläche zur Verbindung mit dem zweiten Versteifungselement auf, wobei die Koppelfläche und die Koppelprofilfläche an Längsverbindungsrändern über einen Verbindungssteg verbunden sind. Dadurch lässt sich das Kammabschnitt-Verbindungselement zum Beispiel in Metallausführung als kostengünstiges Stanzbiegeteil in einem Arbeitsgang gestalten. Aber auch eine Ausführung als Verbundwerkstoffteil in CFK oder dergleichen ist möglich. Bei einem gebogenen Kammabschnitt-Verbindungselement ist es möglich, in Längsrichtung desselben die unterschiedlichen Profile der versteifungselemente leicht zu kontrollieren, was Wartungs- und Prüfarbeiten hinsichtlich Kontrolle auf Rissbildung erheblich vereinfacht, da keine Demontage von Bauteilen sondern nur ein Inspizieren erforderlich ist.

Das Fußabschnitt-Verbindungselement ist vorzugsweise als ein L-Profil ausgebildet und kann somit besonders kostengünstig als Stangenware abgelängt werden. Andere Profilformen sind selbstverständlich denkbar. Die Fußabschnitt-Verbindungselemente können beispielsweise für beide Seiten der Verbindungsanordnung aus dem gleichen Profilstab abgelängt werden, wobei keine spiegelbildlichen Ausführung notwendig sind.

Die Versteifungselemente können zum Beispiel als T-Stringer und Omega-Stringer ausgebildet sein.

In einer alternativen Ausführung ist es bevorzugt, dass das Kammabschnitt-Verbindungselement zusammen mit einem Fußabschnitt-Verbindungselement einstückig ausgebildet ist. Dabei kann das Fußabschnitt-Verbindungselement als eine Fußkoppelfläche mit der Koppelprofilfläche und/oder mit der Koppelfläche des Kammabschnitt-Verbindungselementes einstückig ausgebildet sein. Dieses ist vor allem bei in Längsrichtung in ihrer Mittelachse fluchtenden Versteifungselementen von Vorteil, da die Teilezahl weiter reduziert ist. Aber auch seitlich versetzte Versteifungselemente sind damit koppelbar, indem zum Toleranzausgleich Shims verwendet werden können.

Es ist bevorzugt, dass zumindest ein Fußabschnitt der Versteifungselemente an der Verbindungsstelle der Versteifungselemente verbreitert ist. Dadurch wird eine größere Auflagefläche für die Fußabschnitt-Verbindungselemente für eine vorteilhaft große Kraftübertragung und Steifigkeitserhöhung geschaffen.

Es ist in einer weiteren Ausführung vorgesehen, dass das als Omega-Stringer ausgebildete Versteifungselement an seiner Oberseite im Bereich der Verbindungsanordnung eine in Längsrichtung verlaufende Ausnehmung aufweist, durch welche eine Kontrolle und Inspektion der Versteifungselemente vereinfacht ist.

Bei einem Schalenbauteil mit zwei mittels einer Querstoßlasche verbundenen Schalenelementen sind an der Verbindungsstelle der Schalenelemente Versteifungselemente unterschiedlichen Profilquerschnitts in ihrer Längsrichtung seitlich versetzt mittels der oben beschriebenen alternativen Verbindungsanordnung verbunden oder mittels einer beschriebenen Verbindungsanordnung mit zusätzlichen Shims für einen Toleranzausgleich verbunden. Dabei sind die Fußabschnitt-Verbindungselemente, ob sie nun separat von oder einstückig mit den Kammabschnitt-Verbindungselementen integral, zum Beispiel als Fußkoppelflächen, ausgebildet sind, mit der Querstoßlasche fest verbunden, wodurch sich die Steifigkeit und Kraftübertragungsfähigkeit der Verbindungsstelle erheblich erhöht.

Einerseits werden durch die unabhängige Ausführung der Bauelemente der Verbindungsanordnung Shims bei einer versetzten Anordnung der Versteifungselemente eingespart, und andererseits bei der integralen Bauweise, das heißt, dass die Fußabschnitt-Verbindungselemente einstückig mit den Kammabschnitt-Verbindungselementen ausgebildet sind, Bauteile eingespart, Fertigungszeiten jedoch bei jeder Version verringert. Durch die offene Bauweise in Gestalt von zum Beispiel Stanzbiegeteilen und Ausnehmungen Versteifungselementen ist die Inspizierbarkeit durch diese offene Bauweise nicht nur gewährleistet, sondern auch vereinfacht und verkürzt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Darstellung zweier Verstei- fungselemente unterschiedlichen Profilquer- schnitts mit Schalenelementen;
- Fig. 2: ein Ausführungsbeispiel eines Kammabschnitt- Verbindungselementes einer erfindungsgemäßen Verbindungsanordnung;
- Fig. 3: eine schematische perspektivische Darstellung eines ersten Ausführungsbeispiels einer erfin- dungsgemäßen Verbindungsanordnung mit dem Kamm- abschnitt-Verbindungselement nach Fig. 2 für die Versteifungselemente nach Fig. 1;
- Fig. 4: eine Seitenansicht in Längsrichtung der erfin- dungsgemäßen Verbindungsanordnung nach Fig. 3 mit einem zweiten Fußabschnitt- Verbindungselement bei fluchtenden Mittellinien der Versteifungselemente;
- Fig. 5: die Ansicht nach Fig. 4 bei seitlich versetzten Mittellinien der Versteifungselemente;
- Fig. 6: ein weiteres Ausführungsbeispiel des Kammab- schnitt-Verbindungselementes der erfindungsgemä- β en Verbindungsanordnung;
- Fig. 7: eine schematische perspektivische Darstellung eines zweiten Ausführungsbeispiels der erfin- dungsgemäßen Verbindungsanordnung mit dem Kamm- abschnitt-Verbindungselement nach Fig. 6 für die Versteifungselemente nach Fig. 1;
- Fig. 8: ein noch weiteres Ausführungsbeispiel des Kamm- abschnitt-Verbindungselementes der erfindungsge- mäßen Verbindungsanordnung; und
- Fig. 9: eine schematische perspektivische Darstellung eines dritten Ausführungsbeispiels der erfin- dungsgemäßen Verbindungsanordnung mit dem Kamm- abschnitt-Verbindungselement nach Fig. 8 für die Versteifungselemente nach Fig. 1 bei einem Ver- bindungsstoß von zwei Schalenelementen.

In den Figuren bezeichnen dieselben Bezugszeichen gleiche oder funktionsgleiche Komponenten, soweit nichts Gegenteiliges angegeben ist.

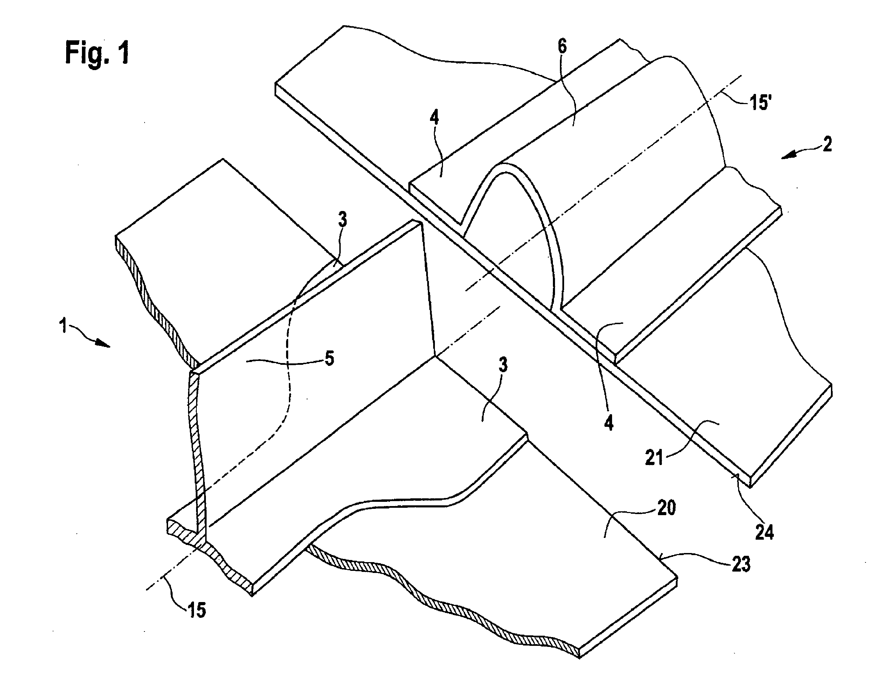

Fig. 1 zeigt eine schematische Darstellung zweier Versteifungselemente 1, 2 unterschiedlichen Profilquerschnitts mit Mittelachsen 15, 15', die in ihren Längsrichtungen verlaufen. Die Versteifungselemente 1, 2 sind hier auf Schalenelementen 20, 21, zum Beispiel eines Schalenbauteils, zu deren Versteifung aufgebracht. Die Schalenelemente 20, 21 sind zum Beispiel Hautschalen für ein Luftfahrzeug und sind aus einem Faserverbundwerkstoff hergestellt, aber auch ein metallischer Werkstoff ist möglich.

Die beiden Versteifungselemente 1, 2 sind hier am Rand einer Verbindungsstelle der Schalenelemente 20, 21 angeordnet. Die Schalenelemente 20, 21 weisen an dieser Verbindungsstelle Querstoßränder 23, 24 auf, an denen sie bei einer Verbindung aneinander anliegen. Diese Verbindung wird weiter unten erläutert.

Das erste Versteifungselement 1 ist hier als ein T-Stringer mit einem Fußabschnitt 3 und einem Kammabschnitt 5 ausgebildet. Im Gegensatz dazu weist das zweite Versteifungselement 2 einen Hohlprofilquerschnitt mit einem Kammabschnitt 6 und Fußabschnitt 4 auf und wird in dieser Ausführung auch als Omega-Stringer bezeichnet. Bei der Verbindung der Schalenelemente 20, 21 ist auch eine Verbindung der Versteifungselemente 1, 2 zur Kraftüberleitung und Versteifung notwendig. Die Fig. 1 zeigt die Versteifungselemente 1, 2 am Rand der Schalenelemente 20, 21. Es ist aber ebenso möglich, dass die beiden Versteifungselemente 1, 2 unterschiedlichen Profilquerschnitts gemeinsam auf einem Schalenbauteil bzw. einem Schalenelement 20, 21 irgendwo auf deren Fläche angeordnet und miteinander zu verbinden sind.

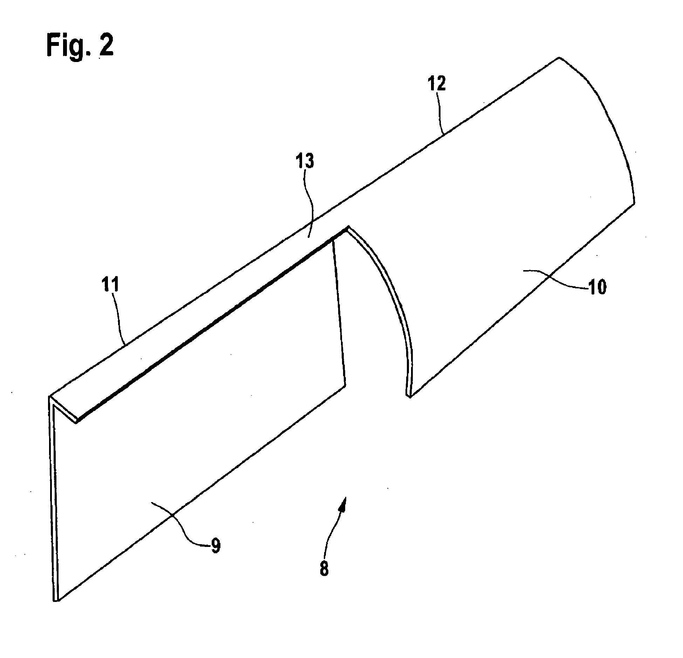

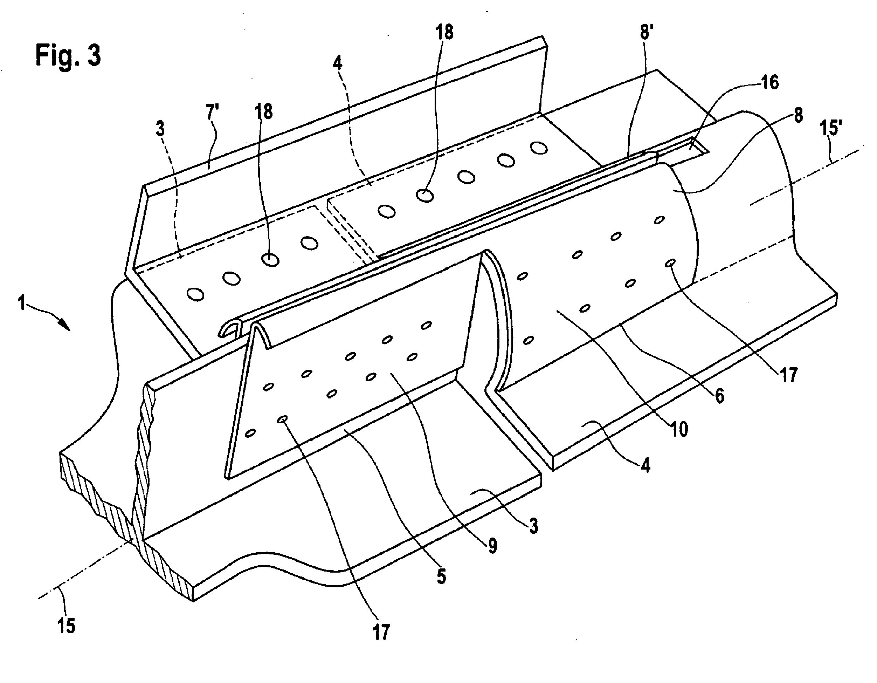

Zur Verbindung der Versteifungselemente 1, 2 unterschiedlichen Profilquerschnitts ist es notwendig, sowohl die Fußabschnitte 3, 4 und die Kammabschnitte 5, 6 form- und kraftschlüssig mit einer Verbindungsanordnung zu verbinden. Hierzu weist ein Kammabschnitt-Verbindungselement 8, welches in Fig. 2 als ein Ausführungsbeispiel einer erfindungsgemäßen Verbindungsanordnung gezeigt ist. Die Fig. 2 wird zusammen mit Fig. 3 erläutert, welche eine schematische perspektivische Darstellung eines ersten Ausführungsbeispiels einer erfindungsgemäßen Verbindungsanordnung mit dem Kammabschnitt-Verbindungselement 8 nach Fig. 2 für die Versteifungselemente 1, 2 nach Fig. 1 zeigt.

Das Kammabschnitt-Verbindungselement 8 weist eine flache Koppelfläche 9 auf, die zu dem Kammabschnitt 5 des ersten Versteifungselementes 1, des T-Stringers, korrespondiert. An einem in der Fig. 2 oben liegenden Längsverbindungsrand 11 der Koppelfläche 9 ist ein Verbindungssteg 13 angeformt, welcher sich über den gesamten Längsverbindungsrad 11 ausdehnt, sich weiter darüber hinaus in seiner Längsrichtung erstreckt und mit einem Längsverbindungsrand 12 einer Koppelprofilfläche 10 verbunden ist. Die Koppelprofilfläche 10 korrespondiert in ihrer Gestalt zu der Außenfläche des zweiten Versteifungselementes 2, dem Omega-Stringer. Dabei ist der Verbindungssteg 13 in diesem Beispiel jeweils an den Längsrändern 11 und 12 um ein vorher festgelegtes Maß und einen bestimmten Radius umgebogen, dass eine bestimmte Steifigkeit des Kammabschnitt-Verbindungselementes 8 erzielt wird. Das Kammabschnitt-Verbindungselement 8 kann aus Metall und/oder Faserverbundwerkstoff hergestellt sein. Aus Metall ist es zum Beispiel als ein Stanzbiegeteil einfach ausführbar.

In Fig. 3 sind die beiden Versteifungselemente 1, 2 zum Beispiel auf einem hier nicht dargestellten Schalenelement aufgebracht oder auch an deren Rändern, wie in Fig. 1 gezeigt ist. Die Mittelachsen 15, 15' der Versteifungselemente 1, 2 sind in einer Linie ausgerichtet und fluchten miteinander. Das Kammabschnitt-Verbindungselement 8 ist hier mit der flachen Koppelfläche 9 an dem Kammabschnitt 5 des T-Stringers 1 zum Beispiel mittels Nieten als Kammbefestigung 17 fest angebracht. Auf der Seite des Omega-Stringers 2 ist die Koppelprofilfläche 10 des Kammabschnitt-Verbindungselementes 8 in gleicher Weise an dem Kammabschnitt 6 des Omega-Stringers 2 angebracht. In diesem Beispiel ist auf der anderen Seite der Kammabschnitte 5 und 6 ein weiteres, spiegelbildliches Kammabschnitt-Verbindungselement 8' in gleichem Aufbau und gleicher Weise an den Kammabschnitten 5 und 6 der zu verbindenden versteifungselemente 1 und 2 befestigt. Dieses Ausführungsbeispiel der Kammabschnitt-Verbindungselemente 8, 8', nämlich, dass die Koppelprofilfläche 10 erst ungefähr in der Mitte des Kammabschnitt-Verbindungselementes 8, 8' beginnt, lässt es zu, dass durch die dadurch entstandene Lücke eine Inspektion des Omega-Stringers 2 an der Verbindungsstelle einfach möglich ist. Von der anderen Seite des Omega-Stringers 2 her ist dieses in diesem Beispiel ebenfalls dadurch ermöglicht, dass das zweite Versteifungselement hier an seiner Oberseite eine Ausnehmung 16 in seiner Längsrichtung aufweist. Dadurch ist zum Einen ebenfalls eine einfache Inspektion möglich, und zum Anderen kann der umgebogene Längsverbindungsrand 12 hier aufgenommen werden.

Zur Verbindung der Fußabschnitte 3 und 4 der Versteifungselemente 1, 2 sind Fußabschnitt-Verbindungselemente 7, 7' vorgesehen, von denen hier nur eins gezeigt ist. Es ist in diesem Beispiel als L-Profil ausgebildet und kann, wie auch das Kammabschnitt-Verbindungselement 8, 8' aus Metall und/oder Faserverbundwerkstoff hergestellt sein. Als ein Profil ist es vorteilhaft einfach als Stangenmaterial ablängbar. An seiner Unterseite liegt es auf den zu verbindenden Fußabschnitte 3, 4 der Versteifungselemente 1, 2 auf und ist mit diesen, zum Beispiel mittels Nieten, in Fußbefestigungen 18 fest verbunden. Um eine große Kraftübertragungsfläche zu erhalten, ist der Fußabschnitt 3 des T-Stringers 1 in diesem Beispiel verbreitert und an den Fußabschnitt des Omega-Stringers 2 angepasst. Die Verbreiterung an dieser Verbindungsstelle kann jedoch entsprechend der Ausführung vorher korrespondierend angepasst werden.

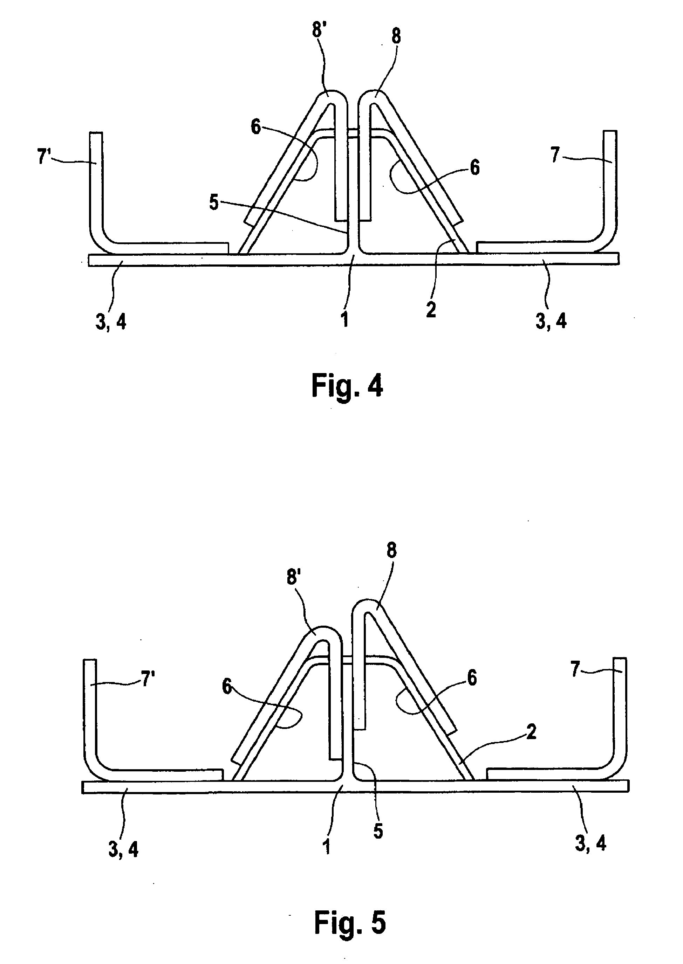

In Fig. 3 sind die Versteifungselemente 1, 2 mit fluchtenden Mittelachsen 15, 15' ausgerichtet. Fig. 4 stellt hierzu eine Ansicht der Fig. 3 in Richtung der Mittelachsen 15, 15' dar. In Fig. 4 ist auch das in Fig. 3 nicht dargestellte zweite Fußabschnitt-Verbindungselement 7 gezeigt. Diese Anordnung ist symmetrisch zu der Ebene, in welcher die fluchtenden Mittelachse 15, 15' verlaufen. Es ist auch vorstellbar, dass anstelle der jeweils doppelten Verbindungselemente 7, 7' und 8, 8' jeweils nur eines von ihnen (zum Beispiel 7 und 8') oder in einer anderen Kombination zur Anwendung kommen kann.

Bei einem seitlichen Versatz der Mittelachsen 15, 15', den Fig. 5 in einer in Längsrichtung der Mittelachse 15, 15' gezeigten Ansicht der Fig. 3 im Vergleich zu Fig. 4 zeigt, kann dieser Versatz mit dem ersten Ausführungsbeispiel des Kammabschnitt-Verbindungselementes 8, 8' der erfindungsgemäßen Verbindungsanordnung vorteilhaft ohne Zwischenlagen, die auch als Shims bezeichnet werden, in einem bestimmten Toleranzbereich dadurch ausgeglichen werden, indem die beiden Kammabschnitt-Verbindungselemente 8, 8' auf der schrägen Außenfläche des Omega-Stringers 2 je nach Versatzrichtung entweder nach oben oder nach unten verschoben werden. So ist eine shimfreie Kopplung zwischen den Kammabschnitten 5 und 6 gewährleistet.

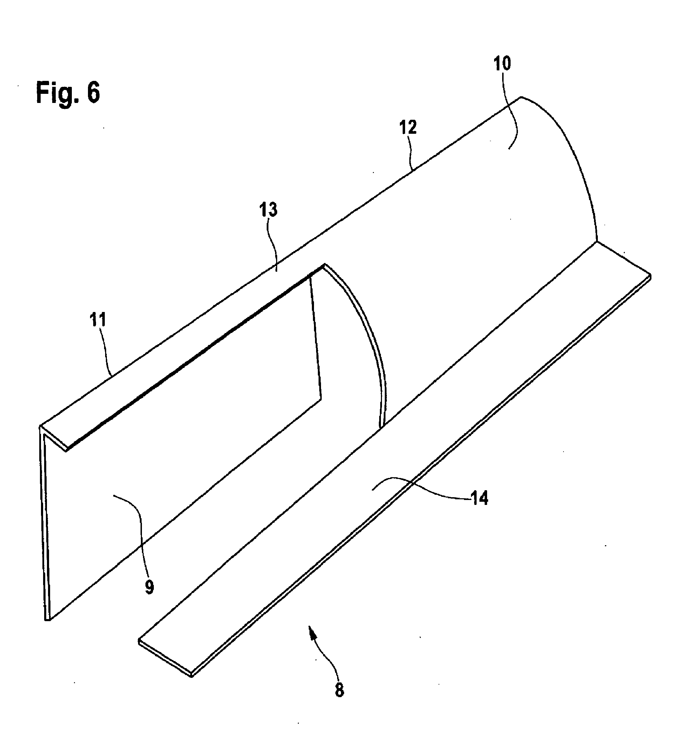

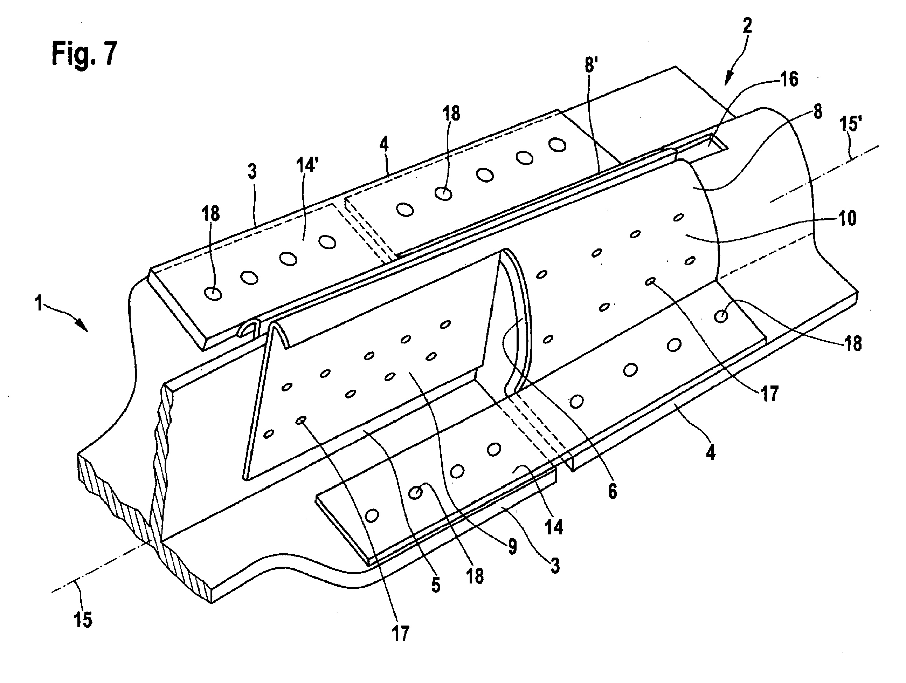

Ein weiteres Ausführungsbeispiel des Kammabschnitt-Verbindungselementes 8 der erfindungsgemäßen Verbindungsanordnung ist in Fig. 6 dargestellt, welche im Zusammenhang mit Fig. 7 erläutert wird. Fig. 7 ist eine schematische perspektivische Darstellung eines zweiten Ausführungsbeispiels der erfindungsgemäßen Verbindungsanordnung mit dem Kammabschnitt-Verbindungselement 8 nach Fig. 6 für die Versteifungselemente nach Fig. 1.

In diesem Ausführungsbeispiel ist das Fußabschnitt-Verbindungselement 7 in Gestalt einer Fußkoppelfläche 14 mit dem Kammabschnitt-Verbindungselement 8 einstückig bzw. integral ausgebildet. Hier ist die Fußkoppelfläche 14 an einem Längsrand der Koppelprofilfläche 10 angebracht, welcher dem Längsverbindungsrand 12 gegenüber liegt. Das übrige Kammabschnitt-Verbindungselement 8 ist wie das der ersten Ausführung nach Fig. 2 aufgebaut. Die Fußkoppelfläche 14 kann selbstverständlich auch als L-Profil oder dergleichen ausgestaltet sein.

Das spiegelbildliche integrale Kammabschnitt-Verbindungselement 8' ist leicht vorstellbar und in Fig. 7 angedeutet. Fig. 7 ist ähnlich der Fig. 3 aufgebaut und dort schon beschrieben. Der Unterschied zu Fig. 3 liegt darin, dass die Kammabschnitt-Verbindungselemente 8, 8' integral mit den Fußabschnitt-Verbindungselementen 7, 7', hier als Fußkoppelflächen 14, 14' ausgeführt sind. Die Fußkoppelflächen 14, 14' sind mit den Fußabschnitten 3, 4 der Versteifungselemente 1, 2 zum Beispiel mit Nieten in Fußbefestigungen 18 fest verbunden.

Das integrale Kammabschnitt-Verbindungselement 8, 8' weist den Vorteil einer geringen Teilezahl gegenüber der ersten Ausführung auf. Bei einem seitlichen Versatz der Mittelachsen 15, 15' der Versteifungselemente 1, 2 sind hier Shims als Zwischenlagen zum Ausgleich zu verwenden.

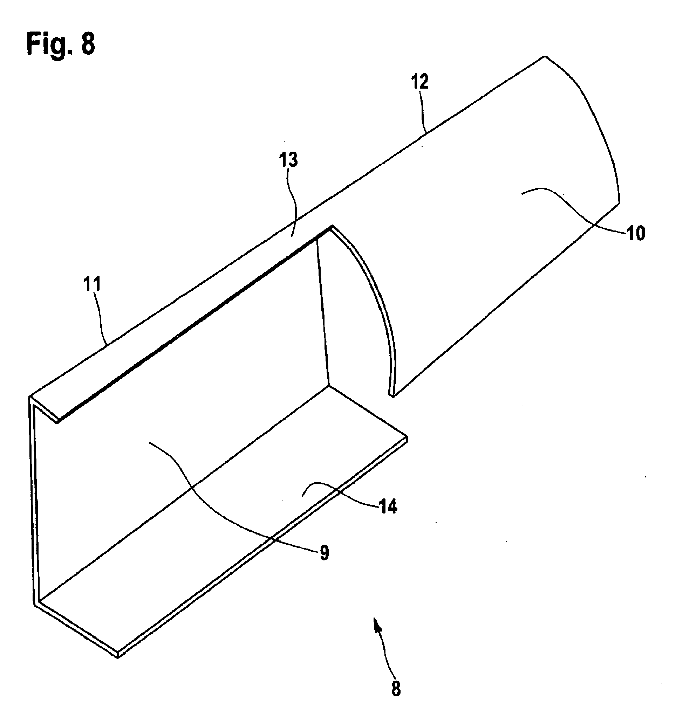

Es ist in einem noch weiteren Ausführungsbeispiel des KammabSchnitt-Verbindungselementes 8, welches Fig. 8 zeigt, auch möglich, dass das Fußabschnitt-Verbindungselement 7 integral an der flachen Koppelfläche 9 des Kammabschnitt-Verbindungselementes 8 angebracht ist. Hierzu gilt das schon im Zusammenhang mit Fig. 6 und 7 beschriebene.

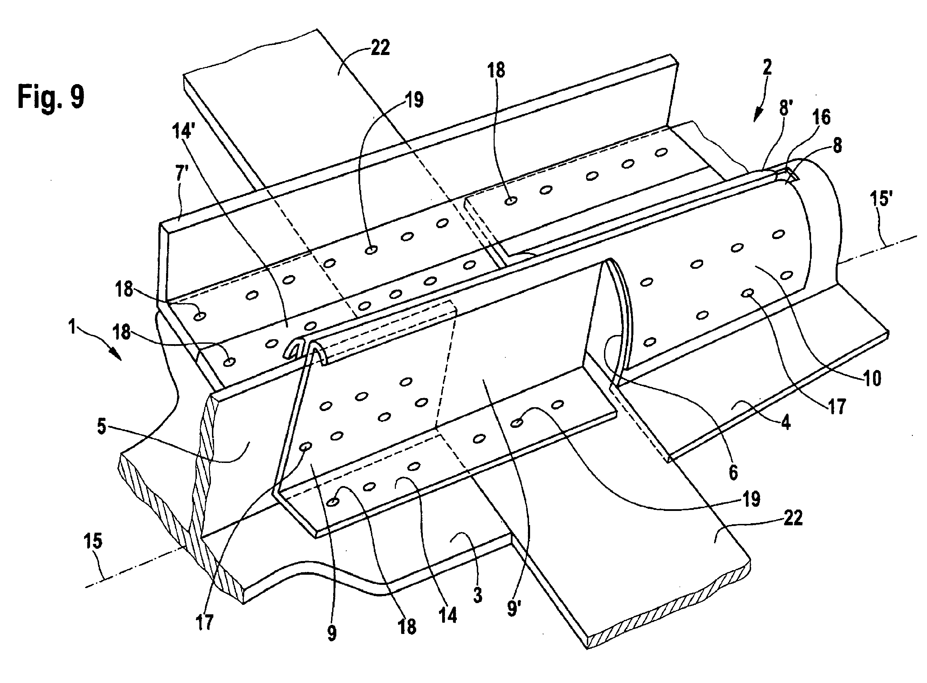

Fig. 9 zeigt schließlich ein drittes Ausführungsbeispiel der erfindungsgemäßen Verbindungsanordnung mit den Kammabschnitt-Verbindungselementen 8, 8' des Ausführungsbeispiels nach Fig. 8 in einer Verlängerung der Koppelflächen 9 zu 9' und somit der mit angeformten Fußkoppelflächen 14, 14' bei einer Verbindungsstelle der Schalenelemente 20, 21 nach Fig. 1. Zusätzlich sind die Fußabschnitt-Verbindungselementen 7, 7' zur Verbindung der Fußabschnitte 3 und 4 vorgesehen, wobei das sonst im Vordergrund befindliche Fußabschnitt-Verbindungselement 7 nicht dargestellt ist.

Diese Verbindungsstelle der Schalenelemente 20, 21 weist eine Querstoßlasche 22 auf, die nicht weiter erläutert wird. An dieser Querstoßlasche 22 liegen die Versteifungselemente 1, 2 von beiden Seiten an und weisen zwischen sich einen Zwischenraum auf, der von den verlängerten Koppelflächen 9' überbrückt ist. Die Kammabschnitt-Verbindungselemente 8, 8' sind wie oben erwähnt mit den korrespondierenden Kammabschnitten 5, 6 der Versteifungselemente 1, 2 verbunden. Die Fußkoppelflächen 14, 14' und die Fußabschnitt-Verbindungselemente 7, 7' sind mit den Fußabschnitten 3, 4 der Versteifungselemente 1, 2 wie oben angegeben in Fußbefestigungen 18 fest verbunden. Zusätzlich sind die Fußabschnitt-Verbindungselemente 7, 7' und die Fußkoppelflächen 14, 14' mit ihren Abschnitten, die sich über der Querstoßlasche 22 befinden, mit dieser Querstoßlasche 22 in Querstoßlaschenbefestigungen 19, zum Beispiel durch Nieten, auch fest verbunden, um so eine besonderes hohe Steifigkeit und Festigkeit der Verbindungsanordnung zu erzielen.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

Beispielsweise kann sich die Koppelfläche 9 des Kammabschnitt-Verbindungselementes 8, 8' weiter hinter die Koppelprofilfläche 10 erstrecken. Auch diese kann sich weiter vor die Koppelfläche 9 ausdehnen, wodurch eine höhere Festigkeit und Steifigkeit erreichbar ist.

Die mit der erfindungsgemäßen Verbindungsanordnung zu verbindenden Versteifungselemente 1, 2 können an einer beliebigen Stelle auf einem Schalenelement 20, 21, so auch an einer Verbindungsstelle der Schalenelemente 20, 21 mit oder ohne Querstoßlasche 22 angeordnet sein.

Es sind auch andere Profilformen der Versteifungselemente 1, 2 möglich.

Bei einer Verbindungsanordnung zum Verbinden zweier Versteifungselemente 1, 2 eines Luft- oder Raumfahrzeugs, wobei die Versteifungselemente 1, 2 unterschiedliche Querschnittsprofile mit jeweils zumindest einem Fußabschnitt 3, 4 und zumindest einem Kammabschnitt 5, 6 aufweisen, ist mindestens ein Fußabschnitt-Verbindungselement 7, 7', welches an einer Seite an die geometrische Form des Fußabschnitts 3 des ersten Versteifungselementes 1 und an der gegenüberliegenden Seite an die geometrische Form des Fußabschnitts 4 des zweiten Versteifungselementes 2 anpassbar und an diesen jeweils fest verbindbar; und mindestens ein Kammabschnitt-Verbindungselement 8, 8', welches an einer Seite an die geometrische Form des Kammabschnitts 5 des ersten Versteifungselementes 1 und an der gegenüberliegenden Seite an die geometrische Form des Kammabschnitts 6 des zweiten Versteifungselementes 2 anpassbar und an diesen jeweils fest verbindbar. Ein Schalenbauteil mit zumindest zwei Versteifungselementen 1, 2 unterschiedlichen Profilquerschnitts weist die Verbindungsanordnung auf.

### Bezugszeichenliste

- 1, 2: Versteifungselement (T-Stringer, Omega- Stringer)
- 3, 4: Fußabschnitt
- 5, 6: Kammabschnitt
- 7, 7': Fußabschnitt-Verbindungselement
- 8, 8': Kammabschnitt-Verbindungselement
- 9: Koppelfläche
- 10: Koppelprofilfläche
- 11: Längsverbindungsrand Koppelfläche
- 12: Längsverbindungsrand Koppelprofilfläche
- 13: Verbindungssteg
- 14: Fußkoppeltläche
- 15, 15': Mittelachse
- 16: Ausnehmung
- 17: Kammbefestigung
- 18: Fußbefestigung
- 19: Querstoßlaschenbefestigung
- 20, 21: Schalenelement
- 22: Querstoßlasche
- 23, 24: Querstoßrand

## Patentansprüche

1. Verbindungsanordnung zum Verbinden zweier versteifungselemente (1, 2) eines Luft- oder Raumfahrzeugs, wobei die Versteifungselemente (1, 2) unterschiedliche Querschnittsprofile mit jeweils zumindest einem Fußabschnitt (3, 4) und zumindest einem Kammabschnitt (5, 6) aufweisen, mit:
mindestens einem Fußabschnitt-Verbindungselement (7, 7'), welches an einer Seite an die geometrische Form des Fußabschnitts (3) des ersten Versteifungselementes (1) und an der gegenüberliegenden Seite an die geometrische Form des Fußabschnitts (4) des zweiten Versteifungselementes (2) anpassbar und an diesen jeweils fest verbindbar ist; und
mindestens einem Kammabschnitt-Verbindungselement (8, 8'), welches an einer Seite an die geometrische Form des Kammabschnitts (5) des ersten Versteifungselementes (1) und an der gegenüberliegenden Seite an die geometrische Form des Kammabschnitts (6) des zweiten Versteifungselementes (2) anpassbar und an diesen jeweils fest verbindbar ist.

2. Verbindungsanordnung nach Anspruch 1,
**dadurch gekennzeichnet,**
**dass** jeweils ein Fußabschnitt-Verbindungselement (7, 7') und ein Kammabschnitt-Verbindungselement (8, 8') beiderseits der Kammabschnitte (5, 6) der zu verbindenden Versteifungselemente (1, 2) an den korrespondierenden Fußabschnitten (3, 4) und Kammabschnitten (5, 6) verbindbar sind.

3. Verbindungsanordnung nach Anspruch 1 oder 2,
**dadurch gekennzeichnet,**
**dass** das Kammabschnitt-Verbindungselement (8, 8') eine Koppelfläche (9) zur Verbindung mit dem ersten Versteifungselement (1) und eine Koppelprofilfläche (10) zur Verbindung mit dem zweiten Versteifungselement (2) aufweist, wobei die Koppelfläche (9) und die Koppelprofilfläche (10) an Längsverbindungsrändern (11, 12) über einen Verbindungssteg (13) verbunden sind.

4. Verbindungsanordnung nach zumindest einem der vorhergehenden Ansprüche,
**dadurch gekennzeichnet,**
**dass** das Fußabschnitt-Verbindungselement (7, 7') ein L-Profil aufweist.

5. Verbindungsanordnung nach zumindest einem der vorhergehenden Ansprüche,
**dadurch gekennzeichnet,**
**dass** das Kammabschnitt-Verbindungselement (8, 8') zum Verbinden eines Versteifungselementes (1) in Form eines T-Stringers und eines Versteifungselementes (1) in Form eines Omega-Stringers angepasst ist.

6. Verbindungsanordnung nach zumindest einem der vorhergehenden Ansprüche,
**dadurch gekennzeichnet,**
**dass** das Fußabschnitt-Verbindungselement (7, 7') und das Kammabschnitt-Verbindungselement (8, 8') aus einem Metall- und/oder Verbundwerkstoff ausgebildet sind.

7. Verbindungsanordnung nach zumindest einem der vorhergehenden Ansprüche,
**dadurch gekennzeichnet,**
**dass** das Fußabschnitt-Verbindungselement (7, 7') und das Kammabschnitt-Verbindungselement (8, 8') für Nietverbindungen mit den zu verbindenden Versteifungselementen (1, 2) verbindbar ausgebildet sind.

8. Verbindungsanordnung nach zumindest einem der vorhergehenden Ansprüche,
**dadurch gekennzeichnet,**
**dass** das Kammabschnitt-Verbindungselement (8, 8') zusammen mit einem Fußabschnitt-Verbindungselement (7, 7') einstückig ausgebildet ist.

9. Verbindungsanordnung nach Anspruch 8
**dadurch gekennzeichnet,**
**dass** das Fußabschnitt-Verbindungselement (7, 7') als eine Fußkoppelfläche (14) mit der Koppelprofilfläche (10) und/oder mit der Koppelfläche (9) des Kammabschnitt-Verbindungselementes (8, 8') einstückig ausgebildet ist.

10. Schalenbauteil eines Luft- oder Raumfahrzeugs, mit zumindest zwei Versteifungselementen (1, 2) unterschiedlichen Querschnittprofils, wobei die Versteifungselemente (1, 2) in ihrer Längsrichtung mittels einer Verbindungsanordnung nach zumindest einem der vorhergehenden Ansprüche verbunden sind, oder wobei die Versteifungselemente (1, 2) in ihrer Längsrichtung seitlich versetzt mittels einer Verbindungsanordnung nach zumindest einem der Ansprüche 1 bis 7 verbunden sind, oder mittels einer Verbindungsanordnung nach zumindest einem der Ansprüche 1 bis 9 mit zusätzlichen Shims für einen Toleranzausgleich verbunden sind.

11. Schalenbauteil nach Anspruch 10,
**dadurch gekennzeichnet,**
**dass** das Schalenbauteil zumindest zwei verbundene Schalenelemente (20, 21) aufweist.

12. Schalenbauteil nach Anspruch 11,
**dadurch gekennzeichnet,**
**dass** die zumindest zwei verbundenen Schalenelemente (20, 21) mit einer Querstoßlasche (22) verbunden sind.

13. Schalenbauteil nach zumindest einem der Ansprüche 10 bis 12,
**dadurch gekennzeichnet,**
**dass** das eine Versteifungselement (1) ein T-Profil-Stringer ist, und dass das andere Versteifungselement (2) ein Omega-Stringer ist.

14. Schalenbauteil nach zumindest einem der Ansprüche 10 bis 13,
**dadurch gekennzeichnet,**
**dass** zumindest ein Fußabschnitt (3, 4) der Versteifungselemente (1, 2) an der Verbindungsstelle der Versteifungselemente (1, 2) verbreitert ist.

15. Schalenbauteil nach Anspruch 13 oder 14,
**dadurch gekennzeichnet,**
**dass** das als Omega-Stringer ausgebildete versteifungselement (2) an seiner Oberseite im Bereich der Verbindungsanordnung eine in Längsrichtung verlaufende Ausnehmung (16) aufweist.

16. Schalenbauteil nach zumindest einem der Ansprüche 10 bis 15,
**dadurch gekennzeichnet,**
**dass** die Kammabschnitt-Verbindungselemente (8, 8') spiegelbildlich ausgebildet sind.

17. Schalenbauteil nach zumindest einem der Ansprüche 12 bis 16,
**dadurch gekennzeichnet,**
**dass** bei an der Verbindungsstelle der Schalenelemente (20, 21) mittels der Verbindungsanordnung verbunden angeordnete Versteifungselemente (1, 2) unterschiedlichen Profilquerschnitts die Fußabschnitt-Verbindungselemente (7, 7_{'}) und/oder Fußkoppelflächen (14) der Kammabschnitt-Verbindungselemente (8, 8') der Verbindungsanordnung mit der Querstoßlasche (22) verbunden sind.

## Claims

1. Connecting arrangement for connecting two reinforcing elements (1, 2) of an aircraft or spacecraft, wherein the reinforcing elements (1, 2) have different cross-sectional profiles with in each case at least one foot portion (3, 4) and at least one comb portion (5, 6), the connecting arrangement comprising:
at least one foot portion connecting element (7, 7') which on one side can be adapted to the geometric shape of the foot portion (3) of the first reinforcing element (1) and on the opposite side can be adapted to the geometric shape of the foot portion (4) of the second reinforcing element (2) and can be connected rigidly thereto in each case; and
at least one comb portion connecting element (8, 8') which on one side can be adapted to the geometric shape of the comb portion (5) of the first reinforcing element (1) and on the opposite side can be adapted to the geometric shape of the comb portion (6) of the second reinforcing element (2) and can be connected rigidly thereto in each case.

2. Connecting arrangement according to claim 1, **characterised in that** in each case a foot portion connecting element (7, 7') and a comb portion connecting element (8, 8') can be connected on both sides of the comb portions (5, 6) of the reinforcing elements (1, 2) to be connected on the corresponding foot portions (3, 4) and comb portions (5, 6).

3. Connecting arrangement according to either claim 1 or claim 2, **characterised in that** the comb portion connecting element (8, 8') has a coupling surface (9) for connecting to the first reinforcing element (1) and has a coupling profiled surface (10) for connecting to the second reinforcing element (2), the coupling surface (9) and the coupling profiled surface (10) being connected along longitudinal connecting edges (11, 12) by a connecting web (13).

4. Connecting arrangement according to at least one of the preceding claims, **characterised in that** the foot portion connecting element (7, 7') has an L-shaped profile.

5. Connecting arrangement according to at least one of the preceding claims, **characterised in that** the comb portion connecting element (8, 8') for connecting a reinforcing element (1) is adapted in the form of a T-stringer and for connecting a reinforcing element (1) is adapted in the form of an omega stringer.

6. Connecting arrangement according to at least one of the preceding claims, **characterised in that** the foot portion connecting element (7, 7') and the comb portion connecting element (8, 8') are formed from a metal and/or a composite material.

7. Connecting arrangement according to at least one of the preceding claims, **characterised in that** the foot portion connecting element (7, 7') and the comb portion connecting element (8, 8') are configured such that they can be connected to the reinforcing elements (1, 2) to be connected by rivet joints.

8. Connecting arrangement according to at least one of the preceding claims, **characterised in that** the comb portion connecting element (8, 8') is configured integrally with a foot portion connecting element (7, 7').

9. Connecting arrangement according to claim 8, **characterised in that** the foot portion connecting element (7, 7') is configured integrally as a foot coupling surface (14) with the coupling profiled surface (10) and/or with the coupling surface (9) of the comb portion connecting element (8, 8').

10. Shell component of an aircraft or spacecraft, with at least two reinforcing elements (1, 2) of different cross-sectional profiles, wherein the reinforcing elements (1, 2) are connected in their longitudinal direction by a connecting arrangement according to at least one of the preceding claims, or wherein the reinforcing elements (1 , 2) are connected in their longitudinal direction, being laterally offset, by a connecting arrangement according to at least one of claims 1 to 7, or are connected by a connecting arrangement according to at least one of claims 1 to 9 with additional shims for a tolerance compensation.

11. Shell component according to claim 10, **characterised in that** the shell component has at least two connected shell elements (20, 21).

12. Shell component according to claim 11, **characterised in that** the at least two connected shell elements (20, 21) are connected by a transverse butt strap (22).

13. Shell component according to at least one of claims 10 to 12, **characterised in that** one reinforcing element (1) is a T-stringer and **in that** the other reinforcing element (2) is an omega stringer.

14. Shell component according to at least one of claims 10 to 13, **characterised in that** at least one foot portion (3, 4) of the reinforcing elements (1, 2) is widened at the connection point of the reinforcing elements (1, 2).

15. Shell component according to either claim 13 or claim 14, **characterised in that** the reinforcing element (2) configured as an omega stringer has a recess (16) running in the longitudinal direction in its upper side in the region of the connecting arrangement.

16. Shell component according to at least one of claims 10 to 15, **characterised in that** the comb portion connecting elements (8, 8') are configured to be mirror-inverted.

17. Shell component according to at least one of claims 12 to 16, **characterised in that** in the case of reinforcing elements (1, 2) which have different profile cross sections and are arranged such that they are connected by the connecting arrangement at the connection point of the shell elements (20, 21), the foot portion connecting elements (7, 7') and/or foot coupling surfaces (14) of the comb portion connecting elements (8, 8') of the connecting arrangement are connected to the transverse butt strap (22).

## Revendications

1. Système d'assemblage permettant d'assembler deux éléments de renforcement (1, 2) d'un aéronef ou véhicule spatial, les éléments de renforcement (1 , 2) présentant différents profils de section avec à chaque fois au moins un segment de pied (3, 4) et au moins un segment de crête (5, 6), comprenant :
- au moins un élément d'assemblage de segment de pied (7, 7'), qui peut être adapté et à chaque fois rigidement relié à la forme géométrique du segment de pied (3) du premier élément de renforcement (1) d'un côté et à la forme géométrique du segment de pied (4) du second élément de renforcement (2) du côté opposé ; et
- au moins un élément d'assemblage de segment de crête (8, 8'), qui peut être adapté et à chaque fois rigidement relié à la forme géométrique du segment de crête (5) du premier élément de renforcement (1) d'un côté et à la forme géométrique du segment de crête (6) du second élément de renforcement (2) du côté opposé.

2. Système d'assemblage selon la revendication 1, **caractérisé en ce qu'**un élément d'assemblage de segment de pied (7, 7') et un élément d'assemblage de segment de crête (8, 8') de part et d'autre des segments de crête (5, 6) des éléments de renforcement à assembler (1, 2) peuvent chacun être reliés aux segments de pied (3, 4) et aux segments de crête (5, b) correspondants.

3. Système d'assemblage selon la revendication 1 ou 2, **caractérisé en ce que** l'élément d'assemblage de segment de crête (8, 8') présente une surface d'accouplement (9) permettant un assemblage avec le premier élément de renforcement (1) et une surface profilée d'accouplement (10) permettant un assemblage avec le second élément de renforcement (2), la surface d'accouplement (9) et la surface profilée d'accouplement (10) étant reliées à des bords de liaison longitudinaux (11, 12) par une nervure de liaison (13).

4. Système d'assemblage selon au moins une des revendications précédentes, **caractérisé en ce que** l'élément d'assemblage de segment de pied (7, 7') présente un profilé.

5. Système d'assemblage selon au moins une des revendications précédentes, **caractérisé en ce que** l'élément d'assemblage de segment de crête (8, 8') est adapté pour assembler un élément de renforcement (1) ayant la forme d'un raidisseur en T et un élément de renforcement (1) ayant la forme d'un raidisseur de profil oméga.

6. Système d'assemblage selon au moins une des revendications précédentes, **caractérisé en ce que** l'élément d'assemblage de segment de pied (7, 7') et l'élément d'assemblage de segment de crête (8, 8') sont conçus à partir d'un matériau métallique et/ou d'un matériau composite.

7. Système d'assemblage selon au moins une des revendications précédentes, **caractérisé en ce que** l'élément d'assemblage de segment de pied (7, 7') et l'élément d'assemblage de segment de crête (8, 8') sont conçus de manière à pouvoir être assemblés aux éléments de renforcement à assembler (1, 2) pour des assemblages rivés.

8. Système d'assemblage selon au moins une des revendications précédentes, **caractérisé en ce que** l'élément d'assemblage de segment de crête (8, 8') est conçu d'un seul tenant avec l'élément d'assemblage de segment de pied (7, 7').

9. Système d'assemblage selon la revendication 8, **caractérisé en ce que** l'élément d'assemblage de segment de pied (7, 7') est réalisé comme une surface d'accouplement de pied (14) solidaire de la surface profilée d'accouplement (10) et/ou de la surface d'accouplement (9) de l'élément d'assemblage de segment de crête (8, 8').

10. Composant de coque d'un aéronef ou véhicule spatial, comprenant au moins deux éléments de renforcement (1, 2) de profils de section différents, les éléments de renforcement (1, 2) étant reliés dans leur sens longitudinal à l'aide d'un système d'assemblage selon au moins une des revendications précédentes, ou les éléments de renforcement (1, 2) étant reliés en décalage latéral dans leur sens longitudinal à l'aide d'un système d'assemblage selon au moins une des revendications 1 à 7, ou à l'aide d'un système d'assemblage selon au moins une des revendications 1 à 9 avec des cales supplémentaires assurant une compensation des tolérances.

11. Composant de coque selon la revendication 10, **caractérisé en ce que** le composant de coque présente au moins deux éléments de coque assemblés (20, 21).

12. Composant de coque selon la revendication 11, **caractérisé en ce que** les au moins deux éléments de coque assemblés (20, 21) sont reliés à une patte de raccord transversal (22).

13. Composant de coque selon au moins une des revendications 10 à 12, **caractérisé en ce que** le premier élément de renforcement (1) est un raidisseur à profil en T et l'autre élément de renforcement (2) est un raidisseur de profil oméga.

14. Composant de coque selon au moins une des revendications 10 à 13, **caractérisé en ce qu'**au moins un segment de pied (3, 4) des éléments de renforcement (1, 2) est élargi au point de jonction des éléments de renforcement (1, 2).

15. Composant de coque selon la revendication 13 ou 14, **caractérisé en ce que** l'élément de renforcement (2) conçu sous forme de raidisseur de profil oméga présente sur sa face supérieure, au niveau du système d'assemblage, un évidement (16) s'étendant dans le sens longitudinal.

16. Composant de coque selon au moins une des revendications 10 à 15, **caractérisé en ce que** les éléments d'assemblage de segment de crête (8, 8') sont conçus en symétrie.

17. Composant de coque selon au moins une des revendications 12 à 16, **caractérisé en ce que** dans le cas d'éléments de renforcement (1, 2) de différentes sections de profil étant disposés de manière liée au niveau du point de jonction des éléments de coque à l'aide du système d'assemblage, les éléments d'assemblage de segment de pied (7, 7') et/ou les surfaces d'accouplement de pied (14) des éléments d'assemblage de segment de crête (8, 8') du système d'assemblage sont reliés à la patte de raccord transversal (22).
